# EUROPÄISCHE PATENTSCHRIFT

(11) **EP 1 633 814 B1**
(45) Veröffentlichungstag und Bekanntmachung des Hinweises auf die Patenterteilung: **02.04.2014**
(21) Anmeldenummer: 04730999.2
(22) Anmeldetag: 04.05.2004
(51) Int. Cl.: C08K 5/50

(54) **HXNBR-KAUTSCHUK ALS VERNETZUNGSMITTEL**
HXNBR RUBBER AS A CROSS-LINKING AGENT
CAOUTCHOUC HXNBR EN TANT QU'AGENT DE RETICULATION

(30) Priorität: 15.05.2003 DE 10321875
(43) Veröffentlichungstag der Anmeldung: 15.03.2006
(73) Patentinhaber: LANXESS Deutschland GmbH, 50569 Köln (DE)
(72) Erfinder: ACHTEN, Dirk, 50735 Köln (DE); WINKELBACH, Hans-Rafael, 51399 Burscheid (DE); MEZGER, Martin, 51399 Burscheid (DE)
(86) Internationale Anmeldenummer: PCT/EP2004/004706
(87) Internationale Veröffentlichungsnummer: WO 2004/101671

(56) Entgegenhaltungen:
- EP-A- 0 346 778
- WO-A-01/77185

## Beschreibung

Diese Erfindung betrifft die Verwendung von einem hydrierten carboxylierten Nitrilbutadienkautschuk (HXNBR), abgeleitet von den Monomeren Butadien, Acrylnitril, Methacrylsäure sowie weiteren acrylischen und/oder vinylischen Monomeren, in dem 0,1 bis 5 Gew.-% Triphenylphosphin molekular verteilt sind und der durch Hydrierung eines mittels Emulsionspolymerisation hergestellten XNBR-Kautschuks hergestellt wird, wodurch der HXNBR-Kautschuk direkt mit dem molekular verteilten Triphenylphosphin ausgestattet ist, als Vernetzungsmittel für Gummi, Kunststoffe und/oder Klebstoffsysteme, wobei die zu vernetzenden Gummis, Kunststoffe und/oder Klebstoffsysteme ausgewählt sind aus der Gruppe bestehend aus Polyurethanen, Polyharnstoffen, Polyestern, Polyamiden, Polymethacrylaten, Polyepoxiden, Polyepichlorhydrinen, den Produkten aus bi- oder polyfunktionellen Epoxiden, Thiiranen, Isocyanaten oder Carbodiimiden mit bi- oder polyfunktionellen Aminen, Alkoholen oder Formaldehyd-Phenolharzen, Kautschuken die über Radikalgeneratoren vernetzt werden, ausgewählt aus Nitrilkautschuk, Chloroprenkautschuk, Ethylen-Acrylat-Kautschuk, Fluorkautschuk und chlorsulfoniertem Polyethylen, und ionisch vernetzbaren Mischungen.

Es besteht ein großer Bedarf an Zusammensetzungen und/oder Stoffen, die in völlig verschiedenen Medien wie Gummi, Kunststoffen und/oder Klebstoffsystemen als Vernetzungsmittel eingesetzt werden können und gegebenenfalls gleichzeitig auch als Elastifizierungsmittel in diesen Medien verwendet werden können.

Im Handbook of Adhesives and Sealants. (1999), 700 pp. Petrie, Edward M., sowie Handbook of Adhesives and Sealants Edited by Muller, B. Erste Auflage, von E. M. Petrie. Materials and Corrosion (2000), 51(7), 525 werden verschiedene Stoffe oder Zusammensetzungen beschrieben, die jeweils für einen Zweck in entweder einem Gummi, einem Kunststoff oder einem Klebstoffsystem verwendet werden können.

So werden mit Maleinsäureanhydrid gepfropftes EPM und EPDM Derivate als elastifizierende Klebstoffbeimischungen offenbart.

Ebenfalls wird der Einsatz von carboxyliertem Nitrilkautschuk in Gummimischungen/-Haftmischungen zur Verbesserung von Haftungseigenschaften von Gummi zu Festigkeitsträgern aus z.B. Polyamid, Polyester, Rayon, (verzinktem) Stahl und Aluminium beschrieben.

Des Weiteren wird die Covulkanisation von epoxidiertem Naturkautschuk mit carboxyliertem Nitrilkautschuk oder Maleinsäureanhydrid gepfropften EPM als Vernetzungsmittel offenbart.

Die Verwendung von Copolymeren aus Acrylat und Methacrylatestern mit Acrylsäure oder Methacrylsäure als Haftvermittler für PSA (Pressure sensitive Adhesives) ist im Stand der. Technik beschrieben.

Ebenfalls ist der Einsatz von carboxylierten Polymeren auf Basis von carboxyliertem Nitrilkautschuk als Additive für die Metall-Metallverklebung bereits bekannt.

Im Stand der Technik ist auch die Verwendung von unter anderem auch flüssigem carboxylierten Nitrilkautschuk zur Elastifizierung und Schlagzähmodifizierung von Klebstoffen, Epoxidharzen sowie Thermoplasten für den Einsatz als (Pulver)klebstoffe und (Pulver)Lacke beschrieben.

So ist ebenfalls offenbart, dass carboxylierte Polymeren als Kontaktklebstoffe aufgrund der Fähigkeit zur Ausbildung von reversiblen ionischen Vernetzungen mit MgO, die zu einer Verbesserung der Anfangskleberate bei hohen aber auch niedrigen Temperaturen führt, verwendet werden können.

Des Weiteren ist die Anwendung von mit Carboxylgruppen modifiziertem Polyethylen als Hotmelt als selbstklebender Folien und Schutzfolien beschrieben.

Im Stand der Technik ist eine solche Vernetzung oder Elastifizierung durch direkte Umsetzung der Gummi, Kunststoffe, oder Klebstoffsysteme mit HXNBR-Kautschuk in Gegenwart von Aktivatoren wie Triphenylphosphin und/oder anderen nicht bekannt. Des Weiteren ist auch der Einsatz von HXNBR-Kautschuk, der molekuar-verteilte Aktivatoren enthält und gegebenenfalls weitere Aktivatoren enthält, als und/oder Elastifizierungsmittel nicht bekannt.

WO 01/77185 A1 betrifft ein Verfahren zur Hydrierung von carboxylierten Nitrilkautschuken. Die Hydrierung kann in Anwesenheit eines Rhodium enthaltenden Katalysators und eines Cokatalysator-Liganden erfolgen. Ein bevorzugter Cokatalysator-Ligand ist Triphenylphosphin.

Die Aufgabe der vorliegenden Erfindung ist es daher, einen Stoff oder eine Zusammensetzung bereit zu stellen, die bei Bedarf sowohl peroxidische, photochemische, Schwefel wie ionische Vernetzungsreaktionen sowie Additions- und Kondensationsreaktionen mit vemetzungs- und kopplungsaktiven Gruppen von Gummi, Kunststoffen, und/oder Klebstoffen ermöglicht.

Diese Aufgabe wird gelöst durch die Verwendung von einem hydrierten carboxylierten Nitrilbutadienkautschuk (HXNBR), in dem Triphenylphosphin molekular verteilt ist, als Vernetzungsmittel für Gummi, Kunststoffe und/oder Klebstoffsysteme, wobei 0,1 1 bis 5 Gew.-% molekular-verteiltes Triphenylphoshin im HXNBR-Kautschuk enthalten ist.

Vorteilhaft ist die erfindungsgemäße Verwendung, wobei das HXNBR, das molekular-verteiltes Triphenylphosphin enthält, noch weiteren, nicht molekular-verteilten, Aktivator enthält.

Vorteilhaft ist die Verwendung als Vernetzungsmittel, wobei die zu vernetzenden Gummis, Kunststoffe und/oder Klebstoffsysteme ausgewählt sind aus der Gruppe bestehend aus Polyurethanen, Polyharnstoffen, Polestern, Polyamiden, Polymethacrylaten, Polyepoxiden, Polyepichlorhydrin, den Produkten aus bi- oder polyfunktionellen Epoxiden, Thiiranen, Isocyanaten oder Carbodiimiden mit bi- oder polyfunktionellen Aminen, Alkoholen oder Formaldehyd-Phenyolresinen, Kautschuken die über Radikalgeneratoren vernetzt werden und ionisch vernetzbaren Mischungen.

Ein weiterer Gegenstand der Erfindung ist ein Erzeugnis erhältlich durch Zusammenmischen eines hydrierten carboxylierten Nitrilbutadienkautschuks (HXNBR), in dem Triphenylphosphin molekular verteilt ist, mit Gummi, Kunststoff und/oder Klebstoffsystemen.

Vorteilhaft ist ein Erzeugnis bei dem der HXNBR-Kauschuk, der molekular verteiltes Triphenylphoshin enthält, noch einen zusätzlichen nicht molekular-verteilten Aktivator enthält.

Ein weiterer Gegenstand der Erfindung ist eine Zusammensetzung enthaltend
a) einen hydrierten carboxylierten Nitrilbutadienkautschuk (HXNBR), in dem Triphenylphosin molekular verteilt ist und
b) einen nicht-molekular verteilten Aktivator.

Vorteilhaft enthält die Zusammensetzung 10 bis 99,9 Gew.-% der Komponente a) und 0,1 bis 90 Gew.-% der Komponente b).

Vorteilhaft ist der Aktivator der Zusammensetzung ausgewählt aus der Gruppe bestehend aus Ethanolamin, primären aliphatischen oder aromatischen Aminen, sekundären aliphatischen oder aromatischen Aminen, organischen Phosphorverbindungen, sauren Katalysatoren und Mischungen dieser Verbindungen.

Die Zusammensetzung enthält 0,1-5 Gew.-% molekular-verteiltes Triphenylphosphin im HXNBR-Kautschuk.

Vorteilhaft enthält die Zusammensetzung noch 0-90 Gew.-% weitere Zusatzstoffe ausgewählt aus der Gruppe bestehend aus organischen Lösungsmitteln, Stabilisatoren, Emulgatoren, Wasser, Weichmachern, Verarbeitungshilfsmitteln und Füllstoffen.

Ein weiterer Gegenstand der Erfindung ist ein Verfahren zur Herstellung der Zusammensetzung umfassend die Schritte
a) Bereitstellung eines HXNBR-Kautschuks, der molekular verteiltes Triphenylphosphin enthält und durch Hydrierung eines mittels Emulsionspolymerisation hergestellten XNBR-Kautschuks hergestellt wurde.
b) Mischen dieses HXNBR-Kautschuks mit weiteren Aktivatoren.

Ein weiterer Gegenstand der Erfindung ist die Verwendung von HXNBR-Kautschuk mit molekular verteiltem Triphenylphosphin als Elastifizierungsmittel für Gummi, Kunststoffe und/oder Klebstoffsysteme.

Vorteilhaft ist die Verwendung des HXNBR-Kautschuks als Elastifizierungsmittel für Gummi, Kunststoffe und/oder Klebstoffsysteme, wenn der HXNBR-Kautschuk noch weiteren nicht-molekular verteilten Aktivator enthält.

Die erfindungsgemäße Zusammensetzung enthält 10 bis 99,9 Gew.-%, bevorzugt 60 bis 99,9 Gew.-% hydrierten carboxylierten Nitrilbutadienkautschuk (HXNBR) und 0,1 bis 90 Gew.-%, bevorzugt 0,1 bis 40 Gew.-% Aktivator und 0 bis 90 Gew.-% Zusatzstoffe. Unter der erfindungsgemäßen Zusammensetzung ist ein Gemisch aus HXNBR mit molekular-verteiltem Triphenylphosphin und weiteren zusätzlichen Aktivatoren zu verstehen.

Unter einem hydrierten carboxylierten Nitrilbutadienkautschuk sind alle dem Fachmann bekannten Copolymere zu verstehen, die abgeleitet sind von den Monomeren Butadien, Acrylnitril, Methacrylsäure sowie weiteren acrylischen und/oder vinylischen Monomeren, die durch eine Emulsionpolymerisation zu einem XNBR (carboxylierter Nitril-Butadien-Kautschuk), wie in WO-A 01/77185 beschrieben, hergestellt und anschließend zum HXNBR hydriert werden. Durch diese Art der Herstellung ist der HXNBR-Kautschuk direkt mit einem molekular verteilten Aktivator, dem Triphenylphosphin ausgestattet. Mit geringen Konzentrationen des Aktivators wird aufgrund seiner molekularen Verteilung eine Aktivierung für Additions- und Kondensationsreaktionen erreicht. Durch Zugabe weiterer Menge von Aktivatoren kann die Reaktivität eingestellt, reguliert und gesteigert werden.

Unter molekular verteiltem Triphenylphosphin versteht man ein im HNBR gelöstes Triphenylphosphin. Dabei ist das Triphenylphosphin so verteilt, dass keine Konzentrationsunterschiede auf einer Größenskala oberhalb von 1 Mikrometer zwischen HNBR und Triphenylphosphin auftreten. Im Unterschied dazu kann bei der mechanischen Einmischung von Triphenylphosphin in HNBR, wobei die Güte der Verteilung des Triphenylphosphins im HNBR abhängig ist von der Mischdauer, von der Mischtemperatur sowie der allgemeinen Zusammensetzung der Mischung, eine solch einheitliche Verteilung nicht erreicht werden.

Unter den weiteren acrylischen und/oder vinylischen Monomeren sind alle dem Fachmann bekannten acrylischen und/oder vinylischen Monomeren zu verstehen. Bevorzugt sind Vinylbenzole, Acrylate, Methacrylate sowie deren freie Säuren. Besonders bevorzugt sind Styrol, Divinylbenzol, Methylacrylat, Ethylacrylat, Butylacrylat, 2-Ethylhexylacrylat, Methacrylonitril, Actylmethacylsäure, Maleinsäureanhydrid, Fumarsäure und Itaconsäure.

Bevorzugt werden hochhydrierte HXNBR-Kautschuke verwendet. Unter hochhydriert werden HXNBR-Kautschuke verstanden, deren Gehalt an Doppelbindungen geringer ist als 40 Doppelbindungen pro 1000 C-Atome, bevorzugt geringer als 15 Doppelbindungen pro 1000 C-Atome. Besonders bevorzugt ist ein Doppelbindungsgehalt im Bereich von 0,2 bis 15 Doppelbindungen pro 1000 C-Atome.

Die Herstellung eines hochhydrierten HXNBR-Kautschuks wird in WO-A 01/77185 beschrieben. Der HXNBR-Kautschuk wird ausgehend von XNBR durch Hydrierung in einem Lösungsverfahren hergestellt, wobei dieser später in Festkautschuk überführt werden kann. Die Monomereinheiten können statistisch als auch blockartig verteilt sein. Bevorzugt ist eine statistische Verteilung.

Der HXNBR-Kautschuk, der in der erfindungsgemäßen Zusammensetzung eingesetzt wird und molekular-verteiltes Triphenylphoshphin enthält und auch ohne weiteren Zusatz von Aktivatoren als Elastifizierungsmittel und/oder vernetzungsaktive Komponente für Gummi, Kunststoffe und/oder Klebstoffsysteme verwendet werden kann, besitzt einen Nitrilgruppengehalt im Bereich von 10 bis 50 Gew.-%, bevorzugt im Bereich von 15 bis 45 Gew.-% und einen Methacrylsäuregehalt im Bereich von 0,1 bis 20 Gew.-%, bevorzugt im Bereich von 1 bis 10 Gew.-% bezogen auf den Gesamtanteil des HXNBR-Kautschuks.

Der HXNBR-Kautschuk enthält 0,1 bis 5 Gew.-% molekular verteiltes Triphenylphosphin.

Der HXNBR-Kautschuk, der bereits molekular-verteiltes Triphenylphosphin enthält, wird in der erfindungsgemäßen Zusammensetzung mit einem weiteren Aktivator versetzt.

Um die Reaktivität der Carboxylgruppen für Additionsreaktionen an Epoxiden / Isocyanaten oder Kodensationsreaktionen mit Aminen und Alkoholen zu erhöhen, müssen häufig Aktivatoren zugesetzt werden. Unter Aktivator sind alle dem Fachmann bekannten Aktivatoren zu verstehen. Bevorzugt sind solche Aktivatoren, die auch für XNBR-Kautschuke eingesetzt werden können. Besonders bevorzugt sind basische oder saure Katalysatoren. Vorteilhaft ist der Aktivator in der erfindungsgemäßen Zusammensetzung ausgewählt aus der Gruppe bestehend aus sauren Katalysatoren wie para-Toluolsulfonsäure, Salicylsäure, aktiviertes αAl₂O₃- oder Kieselsäure und basischen, bevorzugt aminischen Verbindungen wie Ethanolamin, primären oder sekunkären aliphatischen Aminen, organischen Phosphorverbindungen wie Triphenylphosphin, organischen Phosphoniumsalzen wie R₃P⁺-R¹ mit R = C₁₋₆-Alkyl, Ph; R¹ = -CH(CO₂)-(CHR²)ₙCO₂H oder -CHR³(CHR²)ₙCO₂R⁴X-, R² = H_{;} R³ = H, Me, CO₂H; R⁴ = H, C₁₋₆ Alkyl; n = 0-2; X- = Anion und Mischungen dieser Verbindungen. Ganz besonders bevorzugt sind Ethanolamin, Dodecylamin, Triphenylphosphin, p-Toluolsulfonsäure, α-Al₂O₃- oder,Kieselsäure oder Mischungen derselben.

In der erfindungsgemäßen Zusammensetzung aus HXNBR-Kautschuk, der molekular-verteiltes Triphenylphosphin enthält, mit zusätzlichem Aktivator als auch im HXNBR-Kautschuk, der molekular-verteiltes Triphenylphosphin enthält ohne zusätzlichen Aktivator, können noch 0 bis 90 Gew.-%, bevorzugt 0,001 bis 80 Gew.-% an weiteren Zusatzstoffen enthalten sein. Diese weiteren Zusatzstoffe sind ausgewählt aus der Gruppe der organischen Lösungsmittel, Stabilisatoren, Emulgatoren, Wasser und Weichmacher, Verarbeitungshilfsmittel und Füllstoffe.

Bevorzugte organische Lösungsmittel sind Chlorbenzol, Aceton, Methylethylketon, Methylenchlorid, Chlorofonn, Tetrahydrofuran, Toluol oder Mischungen derselben.

Bevorzugte Stabilisatoren sind alle dem Fachmann bekannten Alterungsschutzmittel. Besonders bevorzugt sind 2,2'-Methylen-bis-(4-methyl-6-tert.-butylphenol), 2-Mercaptobenzimidazol, N-isopropyl-N'-phenyl-paraphenylendiamin.

Bevorzugte Emulgatoren sind alle dem Fachmann bekannten Emulgatoren wie Fettsäuren und deren Alkali und/oder Erdalkalisalze, (disproportionierte) Harzsäuren und deren Salze, Alkyl-sulfonsäuren und Arylsulfonsäure, organische Sulfate sowie die Klasse der nicht ionischen Emulgatoren. Besonders bevorzugt sind die Natrium- und Kaliumstearate, -Oleate, organische - Sulfate und -Sulfonate und Harzsäuren.

Bevorzugte Weichmacher sind Trioctylphosphat, Benzyloctyladipat, Polyphthalate, Tri(2-ethylhexyl)-trimellitat, aromatische Polyether und Etherthioether.

Bevorzugte Verarbeitungshilfsmittel sind Stearylamine und Zinkstearat.

Bevorzugt Füllstoffe sind Ruß, Silica, Talkum, Tonerden und Calciumcarbonat.

Zur Herstellung der erfindungsgemäßen Zusammensetzung wird der HXNBR-Kautschuk, der bereits molekular-verteiltes Triphenylhosphin enthält, mit dem zusätzlichen Aktivator auf die dem Fachmann bekannte Art vermischt. Bevorzugt werden zur Vermischung Mischwalzen verwendet, aber auch Innenmischer und Mischextruder sowie die Mischung in Lösung oder Dispersion ist möglich.

Sowohl der HXNBR-Kautschuk mit molekular verteiltem Triphenylphosphin ohne zusätzlichen Aktivator als auch die erfindungsgemäße Zusammensetzung, bei der der HXNBR-Kautschuk mit molekular verteiltem Triphenylphosphin und zusätzlichen Aktivatoren eingesetzt wird, können sowohl als Vernetzungsmittel als auch als Elastifizierungsmittel für Gummi, Kunststoffe und/oder Klebstoffsysteme verwendet werden, da der HXNBR-Kautschuk, jeweils mit molekular-verteiltem Triphenylphosphin, aber mit und ohne zusätzlichen Aktivator neben einer vernetzenden Eigenschaft auch elastifizierend auf Gummis, Kunststoffe und/oder Klebstoffsysteme wirkt.

Unter dem Begriff Gummi sind folgende Elastomere zu verstehen. Polymeren Verbindungen mit einem Glaspunkt unterhalb der Raumtemperatur von 20°C, Polychloropren, lendienkautschuk, Ethylen-Polyethylen acrylate, Kautschuk, Fluorkautschuke, chlorsulfoniertes Polyethylen, Nitrilenkautschuk. Unter dem Begriff Kunststoffe sind folgende Thermoplaste und Duromere (vernetzter, nicht aufschmelzbarer Thermoplast) zu verstehen: Polyurethanen, Polyharnstoffen, Polyestern, Polyamiden, Polymethacrylaten, Polyepoxiden, Polyepichlorhydrinen.

Klebstoffsysteme sind Unter dem Begriff Klebstoffsysteme sind folgende Klebstoffe und/oder Klebstoffsysteme als auch Beschichtungsmittel wie Lacke und coatings zu verstehen ausgewählt aus solchen, die aus bi- oder polyfunktionellen Epoxiden / Thiiranen / Isocyanaten / Carbodiimiden in Kombination mit bi- oder polyfunktionellen Aminen / Alkoholen / Carboxylsäuren, Formaldehyd-Phenolharzen hergestellt werden oder Produkte, die aus der Umsetzung von vernetzbaren funktionellen (Meth)Acrylaten und/oder Kautschuken mit Radikalgeneratoren entstehen. Außerdem sind unter Klebstoffsystemen auch ionische Netzwerke mit Grundgerüsten, ausgewählt aus der Gruppe bestehend aus polyfunktionellen Sulfonaten, polyfunktionellen Carboxylaten, polyfunktionellen Stickstoff- und Phophorverbindungen oder Chelatverbindungen, die mit stark polaren Ionen umgesetzt werden, zu verstehen.

Unter Radikalgeneratoren sind alle dem Fachmann bekannten Initiatoren bekannt, die Radikale erzeugen können. Bevorzugt sind die Radikalgeneratoren, ausgewählt aus der Gruppe bestehend aus Photoinitiatoren, Peroxiden, Aziden und Redoxinitiatoren.

Unter vernetzbaren, funkionellen (Meth)Acrylaten sind bevorzugt Hydroxyethylmethacrylat und Zinkdi(meth)acrylat zu verstehen.

Unter Kautschuken, die mit den Radikalgeneratoren umgesetzt werden können, sind Nitrilkautschuk, Chloroprenkautschuk, Ethylen-Acrylat-Kautschuk (AEM), Fluor-Kautschuk (FKM), chlorsulfoniertes Polyethylen zu verstehen.

Unter ionischen Netzwerken sind Kombinationen aus polyfunktionellen Sulfonaten, Carboxylate, polyfunktionelle Stickstoffverbindungen, polyfunktionelle Phosphorverbindugen oder polyfunktionellen Chelatverbindungen mit stark polaren Ionen zu verstehen. Unter stark polaren Ionen sind ein- und mehrwertige Ionen zu verstehen. Besonders bevorzugt sind ein- und mehrwertige Ionen ausgewählt aus der Gruppe bestehend aus H, Li, Mg, Ca, Al, Ba, Ti, Mn, Fe, Cu, Zn und Sn zu verstehen.

Bevorzugte polyfunktionelle Sulfonate sind Polystyrolsulfonsäure und chlorsulfoniertes Polyethylen. Bevorzugte Carboxylate sind carboxylierter Butadiennitrilkautschuk (NBR), carboxylierter Styrolbutadienkautschuk (XSBR), Maleinsäureanhydrid gepfropftes Ethylen-Propylen-Copolymer (EPM), Ethylen-Propylen-Dien-Copolymer (EPDM) oder Polypropylen (PP) und Ethylen-Acrylat-Kautschuke (AEM).

Unter polyfunktionellen Stickstoff- und Phosphorverbindungen oder Chelatverbindungen sind bevorzugt Polyvinylpyrrolidon, Polyphosphate, EDTA (Ethylendiamintetraessigsäure oder das Natriumsalz dieser Säure) und Nucleinsäuren zu verstehen.

Zur Herstellung eines Erzeugnisses aus einem Gummi, einem Kunststoff oder einem Klebstoffsystem und dem HXNBR-Kautschuk mit dem molekular verteiltem Triphenylphosphin oder der erfindungsgemäßen Zusammensetzung aus HXNBR, der molekular-verteiltes Triphenylphosphin und einen weiteren Aktivator enthält, kann der HXNBR-Kautschuk mit molekular-verteiltem Triphenylphosphin sowohl in fester Form, in einem geeigneten organischen Lösungsmittel oder in wässriger Dispersion vorliegen.

Vorteilhaft an dem HXNBR-Kautschuk mit molekular verteiltem Triphenylphosphin sowohl ohne als auch mit zusätzlichem Aktivator sind nicht nur die elastifzierenden Eigenschaften, sondern auch seine breite Anwendung nicht nur für eine peroxidische sondern auch für eine photochemische, Schwefel induziierte oder ionische Vernetzungsreaktion sowie Additions- und Kondensationsreaktionen mit den vernetzungs- und kopplungsaktiven Gruppen der Gummis, Kunststoffen und/oder Klebstoffsystemen, die vom HXNBR-Kautschuk, der molekular-verteiltes Triphenylphosphin enthält, oder der erfindungsgemäßen Zusammensetzung vernetzt werden. Weiterhin kann der HXNBR-Kautschuk mit molekular-verteiltem Triphenylphosphin, der mit und ohne Aktivator versetzt wurde als Elastifzierungsmittel, Kompatibilisator und Kleberstoff / Lackrohstoff eingesetzt werden. Ein weiterer Vorteil sind die stabilen, ölbeständigen, hochtemperatur-, oxidations- und chemikalienbeständigen Blends die bei der Vermischung von HXNBR-Kautschuk mit molekular verteiltem Triphenylphosphin oder der erfindungsgemäßen Zusammensetzung erhältlich sind.

Durch die Vielzahl der Verlmüpfungsmöglichkeiten bietet das HXNBR mit molekular-verteiltem Triphenylphosphin sowie das HXNBR mit molekular-verteiltem Triphenylphosphin und zusätzlichem Aktivator ein breiteres Einsatzgebiet, während in den herkömmlichen bisher bekannten Zusätzen jeweils nur eine Verwendung für nur ein Einsatzgebiet möglich war.

### Beispiele

| | |
|---|---|
| Therban^{®} VP KA 8889 | hydriertes Acrylnitril-Butadien-Methacrylsäure-Terpolymer (HXNBR) von Bayer AG, Acrylnitrilgehalt 32 Gew.-%. |
| Therban^{®} C3407 | hydriertes Acrylnitril-Butadien-Copolymer (HNBR) von Bayer AG, Acrylnitrilgehalt 34 Gew.-%. |
| Vanfre^{®} VAM | organischer Phosphatester, freie Säure von Vanderbilt, Dichte bei 25°C 0,97 g/ cm³. |
| Rhenofit^{®} DDA-70 | 70 Gew.-% Diphenylamin-Derivat (dry liquid) von Rheinchemie |
| Corax^{®} N 550 | Ruß Fast Extruding Furnace (FEF) von Degussa AG |
| Diplast^{®} TM 8-10ST | Stab. Trimellitate von C₈-C₁₉ linearen Alkoholen von Lonza, Dichte 0,97 g/ cm³ |
| Vulkanox^{®} ZMB2 | Zinksalz von 4- und 5-Methyl-2- Mercaptobenzimidazol mit einer Dichte von 1,25 g/cm³ bei 25°C von Bayer AG |
| Desmodur^{®} 15 | 1,5 Naphthylendiisocyanat von Bayer AG |
| Desmodur^{®} 44 | 4,4'-Diphenylmethandiisocyanat von Bayer AG |
| Desmodur^{®} TT | dimeres 2,4-Toluylendiisocyanat von Bayer AG |
| Rhenogran^{®} P50 | 50 Gew.-% Polycarbodiimid mit einer Dichte von 1,01 g/cm³ bei 25°C von Rheinchemie |
| Polydispersion^{®} T VC 40P | Di-(tert, Butyl peroxy isopropyl)-Benzol 40 Gew.-% von Rheinchemie mit einer Dichte von 1,10 g/cm³ bei 25°C |
| Perkalink^{®} 301 | Triallylisocyanurat von Akzo Nobel mit einer Dichte von 1,16 g/cm³ bei 25°C |
| Triphenylphosphin* | molekular im Kautschuk gelöst |
| Epoxy^{®} 4 | Methylen-bis-(N,N-glycidylanilin) von Bakelite AG |
| DER RESIN^{®} 332 | aromatisches Diallylepoxid von Dow |
| Epoxy^{®} 3 | N,N-Bis-(2,3-epoxypropyl)4-(2,3-epoxypropoxy)-anilin von Bakelite AG |
| DER^{®} 732 | Polyglycoldiepoxid von Dow |
| Triphenylphosphin | purum 97 % von Aldrich |
| Vestamid^{®} | Polyamid 12 von Degussa |
| Durethan^{®} | Polyamid 66 von Bayer AG |
| Trogamid^{®} | Polyamid 63 von Degussa AG |
| Krynac^{®} X7.40 | Acrylnitril-Butadien-Methacrylsäure-Terpolymer (XNBR) von Bayer, Acrylnitrilgehalt 26,5 Gew.-%. |
| Vulkasil^{®} S | aktives Silica, gefällt, pH 6, Oberfläche ca. 175 m²/g von Bayer AG |
| Siliquest^{®} RC-1 Silane | Vinylsilan von Witco Aluminiumstearat von Riedel de Haen AG, mit einer Dichte von 0,95 g/cm³ bei 25°C |
| Resin^{®} SP 1045 | Hitze aktives Octylphenolformaldehydresin mit Methylol-Gruppen von Schenectady international |
| Zinndichlorid | purum > 98 % von Fluka |

Nicht erfindungsgemäße Zusammensetzungen und daraus resultierende Vergleichsbeispiele und Ergebnisse sind mit # gekennzeichnet.

**Tabelle 1: Rezepturen zur Vernetzung von HXNBR Mischungen mit verschiedenen Diisocyanaten und Polycarbodiimid zum Teil in Gegenwart eines peroxidischen Vemetzungssystems im Vergleich mit Standard HNBR Kautschuk.**

| Die Mischungsbestandteile werden in Gewichtsteilen (pro 100) bezogen auf die eingesetzte Gesamtkautschukmenge (HXNBR / HNBR) angegeben. | | | | | | | | | | | | |
|---|---|---|---|---|---|---|---|---|---|---|---|---|
| **Mischungszusammensetzung:** | **1** | **2** | **3** | **4** | **5** | **6** | **7**# | **8** | **9** | **10** | **11** | **12**# |
| Therban^{®} VP KA 8889 | 100 | 100 | 100 | 100 | 100 | 50 | --- | 100 | 100 | 100 | 50 | --- |
| Therban^{®} A3407 | --- | --- | --- | --- | --- | 50 | 100 | --- | --- | --- | 50 | 100 |
| Vanfre^{®} VAM | 1,0 | 1,0 | 1,0 | 1,0 | 1,0 | 1,0 | --- | --- | 1,0 | 1,0 | 1,0 | 1,0 |
| Rhenofit^{®} DDA-70 | 1,4 | 1,4 | 1,4 | 1,4 | 1,4 | 1,4 | 1,4 | 1,4 | 1,4 | 1,4 | 1,4 | 1,4 |
| Corax^{®} N 550 | 50 | 50 | 50 | 50 | 50 | 50 | 50 | 50 | 50 | 50 | 50 | 50 |
| Diplast^{®} TM 8-10/ST | 5 | 5 | 5 | 5 | 5 | 5 | 5 | 5 | 5 | 5 | 5 | 5 |
| Vulkanox^{®} ZMB2 | 0,4 | 0,4 | 0,4 | 0,4 | 0,4 | 0,4 | --- | --- | 0,4 | 0,4 | 0,4 | 0,4 |
| Desmodur^{®} 15 | 6 | --- | --- | --- | --- | --- | --- | --- | --- | --- | --- | --- |
| Desmodur^{®} 44 | --- | 8 | --- | --- | --- | --- | --- | --- | --- | --- | --- | --- |
| Desmodur^{®} TT | --- | --- | 9 | --- | 5 | 5 | 9 | 9 | 9 | 5 | 5 | --- |
| Rhenogran^{®} P-50 | --- | --- | --- | 10 | --- | --- | --- | --- | --- | --- | --- | --- |
| Polydispersion^{®} T VC 40P | --- | --- | --- | --- | 5 | 5 | --- | --- | --- | 5 | 5 | 7 |
| Perkalink^{®} 301 | --- | --- | --- | --- | 1,5 | 1,5 | --- | --- | --- | 1,5 | 1,5 | 1,5 |
| Triphenylphosphin* | 1 | 1 | 1 | 1 | 1 | 1 | 1 | 1 | 1 | 1 | 1 | 1 |

Zur Herstellung der Mischung werden die Bestandteile auf einer Mischwalze in der Reihenfolge Kautschuk, Füllstoffe, Stabilisatoren, und Verarbeitungshilfsmittel zugemischt. Die Walze hat eine Temperatur von 60°C.

Die aufgeführten Mischungen werden im Folgenden auf Vulkanisationsverhalten, physikalische Eigenschaften, Alterungsbeständigkeit und Quellungsverhalten in verschiedenen Medien untersucht.

**Tabelle 2 Ergebnisse der Vulkanisationsprüfung der Mischungen im Monsanto Rheometer MDR 2000 E bei 170°C und 30 min.**

| **Mischung:** | | **1** | **2** | **3** | **4** | **5** | **6** | **7**# | **8** | **9** | **10** | **11** | **12**# |
|---|---|---|---|---|---|---|---|---|---|---|---|---|---|
| Fmin | (dNm) | 1,4 | 1,7 | 1,7 | 2,0 | 1,5 | 1,6 | 1,6 | 6,0 | 2,1 | 1,9 | 1,9 | 1,6 |
| Fmax | (dNm) | 7,6 | 10,2 | 10,1 | 14,9 | 15,6 | 19,5 | 2,2 | 26,7 | 13,3 | 13,6 | 16,2 | 20,5 |
| Fmax-Fmin | (dNm) | 6,2 | 8,5 | 8,4 | 12,9 | 14,1 | 17,9 | 0,6 | 20,7 | 11,2 | 11,7 | 14,3 | 18,9 |
| TS 02 | (min) | 2,5 | 1,8 | 1,0 | 1,1 | 1,2 | 1,1 | --- | 0,8 | 1,0 | 1,3 | 1,1 | 1,4 |
| T10 | (min) | 0,9 | 0,9 | 0,6 | 1,0 | 0,9 | 1,0 | --- | 0,8 | 0,7 | 0,9 | 0,9 | 1,3 |
| T 50 | (min) | 4,8 | 5,3 | 2,7 | 1,5 | 1,3 | 4,5 | --- | 6,4 | 4,5 | 4,0 | 3,9 | 5,4 |
| T 80 | (min) | 14,9 | 15,5 | 18,3 | 2,0 | 9,1 | 9,4 | --- | 17,4 | 17,9 | 8,7 | 8,3 | 11,0 |
| T 90 | (min) | 21,4 | 21,6 | 24,8 | 2,3 | 12,4 | 12,9 | --- | 23,0 | 23,9 | 11,8 | 11,4 | 15,1 |
| T 95 | (min) | 25,4 | 25,4 | 27,5 | 2,6 | 15,5 | 15,9 | --- | 26,2 | 26,9 | 14,6 | 14,0 | 19,0 |
| tan δ von MDR (Ende) | | 0,3 | 0,3 | 0,2 | --- | 0,1 | 1,0 | --- | 0,1 | 0,2 | 0,1 | 0,1 | 0,1 |

Man erkennt deutlich die erhöhte Reaktivität von HXNBR enthaltenden Mischungen im Vergleich zu HNBR Mischungen (Zeile Fmax - Fmin) in Bezug auf die Vernetzungsaktivität von Diisocyanaten wie Desmodur^{®} 15/44/TT sowie Polycarbodiimiden wie Rhenogran^{®} P50 sowie auch gegenüber peroxidischer Vernetzung mit Polydispersion^{®} T VC 40P.

**Tabelle 3 Ergebnisse physikalischer Prüfungen der Vulkanisateigenschaften bei Raumtemperatur an ungealterten / gealterten Proben.**

| | | | | | | | |
|---|---|---|---|---|---|---|---|
| Die Alterung erfolgt im Heißlufttrockenschrank oder durch Lagerung in verschiedenen Medien. | | | | | | | |
| Neben Zugdehnungskurven nach DIN 53504 werden Volumenquellung und Shore A Härte nach DIN 53 505 geprüft. | | | | | | | |
| Die Vulkanisation erfolgte bei 170°C für den jeweils angegebenen Zeitraum bei ca. 30 bar Druck. | | | | | | | |

| **Vulkanisateigenschaften:ISO- Stab 2 (aus 2mm Platte)** | | | | | | | |
|---|---|---|---|---|---|---|---|
| Mischung: | | | 8 | 9 | 10 | 11 | 12# |
| 170°C Heizzeiten: | | (min) | 30 | 30 | 20 | 20 | 24 |
| F | (MPa) | | 20,7 | 19 | 21 | 22 | 24 |
| D | (%) | | 200 | 425 | 370 | 345 | 365 |
| S 50 | (MPa) | | 4,3 | 3,3 | 2,2 | 2,3 | 1,6 |
| S 100 | (MPa) | | 10 | 5,6 | 4,4 | 4,9 | 4,0 |
| S 150 | (MPa) | | 15,9 | 8,3 | 7,6 | 8,9 | 8,5 |
| S 200 | (MPa) | | 20,7 | 10,9 | 11,4 | 13,4 | 13,5 |
| S 250 | (MPa) | | ---/--- | 13,2 | 15 | 17,3 | 18,1 |
| S 300 | (MPa) | | ---/--- | 15,3 | 18 | 20,6 | 21,5 |
| H (Stab) | (Shore A) | | 82 | 80 | 73 | 73 | 66 |

| Nach Lagerung in Heißluft bei 125°C | | | | | | | |
|---|---|---|---|---|---|---|---|
| F (MPa) | | Nullwert | 20,7 | 19,3 | 21,6 | 22,7 | 24,8 |
| F (MPa) | | 72h | 23,1 | 21,4 | 23,9 | 23,5 | 24,7 |
| F (MPa) | | 168h | 24,9 | 20,1 | 23,2 | 21,5 | 25,3 |
| D (%) | | Nullwert | 200 | 425 | 370 | 345 | 365 |
| D (%) | (%) | 72h | 155 | 315 | 230 | 245 | 338 |
| D (%) | (%) | 168h | 187 | 243 | 192 | 214 | 216 |

| Nach Lagerung in Heißluft bei 150°C | | | | | | | |
|---|---|---|---|---|---|---|---|
| F (MPa) | | Nullwert | 20,7 | 19,3 | 21,6 | 22,7 | 24,8 |
| F (MPa) | | 72h | 24,4 | 23,9 | 22,2 | 23,3 | 26,2 |
| F (MPa) | | 168h | 22,7 | 23,3 | 22,3 | 22 | 24,9 |
| D (%) | | Nullwert | 200 | 425 | 370 | 345 | 365 |
| D (%) | | 72h | 135 | 210 | 145 | 175 | 307 |
| D (%) | | 168h | 90 | 148 | 106 | 132 | 232 |

| Nach Lagerung in IRM Öl 903 (Industrie Referenz ÖL) bei 150°C | | | | | | | |
|---|---|---|---|---|---|---|---|
| F (MPa) | | Nullwert | 20,7 | 19,3 | 21,6 | 22,7 | 24,8 |
| F (MPa) | | 72h | 16,0 | 16,9 | 18,0 | 18,5 | 20,8 |
| D (%) | | Nullwert | 200 | 425 | 370 | 345 | 365 |
| D (%) | | 72h | 339 | 412 | 290 | 323 | 316 |
| H (Shore A) | | Nullwert | 82 | 80 | 73 | 73 | 66 |
| H (Shore A) | | 72h | 62,9 | 65,8 | 61 | 58,9 | 57,2 |
| G (%) | | 72h | 14,3 | 13,1 | 13 | 15,6 | 17,1 |
| V (%) | | 72h | 17,9 | 16,5 | 16,4 | 19,4 | 20,3 |

| Nach Lagerung in Pentosin CHF 11S (synthetisches Hydraulik Öl mit einem Nutztemperaturbereich von -40°C bis 130°C) bei 125°C | | | | | | | |
|---|---|---|---|---|---|---|---|
| F (MPa) | | Nullwert | 20,7 | 19,3 | 21,6 | 22,7 | 24,8 |
| F (MPa) | | 72h | 18,5 | 18,5 | 22,6 | 22 | 24 |
| D (%) | | Nullwert | 200 | 425 | 370 | 345 | 365 |
| D (%) | | 72h | 312 | 413 | 304 | 316 | 356 |
| H (Shore A) | | Nullwert | 82 | 80 | 73 | 73 | 66 |
| H (Shore A) | | 72h | 73 | 76 | 69 | 69 | 63 |
| G (%) | | 72h | 2,96 | 2,66 | 2,22 | 3,14 | 4,20 |
| V (%) | | 72h | 5,18 | 5,10 | 4,43 | 5,57 | 6,30 |

| Lagerung in entionisiertem Wasser (Edelwasser) bei 100°C | | | | | | | |
|---|---|---|---|---|---|---|---|
| G (%) | | 48h | 5,20 | 5,60 | 2,60 | 2,00 | 1,30 |
| V (%) | | 48h | 5,90 | 6,10 | 2,50 | 1,80 | 1,20 |

Die alternativen Vernetzungssysteme auf Basis von Diisocyanaten erzeugen in Kombination mit HXNBR vergleichbare physikalische Eigenschaften wie klassische peroxidische Vernetzungssysteme für HNBR. Eine Kombination von verschiedenen Vernetzungssystemen und damit eine deutlich größere Wahl von Einsatzgebieten ist im Fall von HXNBR in Gegenwart von molekular gelöstem Triphenylphosphin möglich.

**Tabelle 4 Rezepturen zur Vernetzung von HXNBR Mischungen mit Diisocynat zum Teil in Gegenwart eines peroxidischen Vernetzungssystems im Vergleich mit Standard HNBR Kautschuk.**

| Die Mischungsbestandteile werden in Gewichtsteilen (pro 100) bezogen auf die eingesetzte Gesamtkautschukmenge (HXNBR / HNBR) angegeben. | | | |
|---|---|---|---|
| **Mischungszusammensetzung:** | **13** | **14** | **15#** |
| Therban^{®} VP KA 8889 | 100 | 50 | |
| Therban^{®} A 3407 | | 50 | 100 |
| Vanfre^{®} VAM | | 1 | 1 |
| Rhenofit^{®} DDA-70 | 1,4 | 1,4 | 1,4 |
| Corax^{®} N 550 | 50 | 50 | 50 |
| Diplast^{®} TM 8-10/ST | 5 | 5 | 5 |
| Vulkanox^{®} ZMB2 | | 0,4 | 0,4 |
| Desmodur^{®} TT | 9 | 5 | |
| Polydispersion^{®} T VC 40P | | 5 | 7 |
| PERKALINK^{®} 301 | | 1,5 | 1,5 |
| Triphenylphosphin* | 1 | 1 | 1 |

Zur Herstellung der Mischung werden die Bestandteile auf einer Mischwalze in der Reihenfolge Kautschuk, Füllstoffe, Stabilisatoren, Vernetzungsmittel und Verarbeitungshilfsmittel zugemischt. Die Walze hat eine Temperatur von 60°C.

**Tabelle 5 Ergebnisse der Vulkanisationsprüfung der Mischungen im Monsanto Rheometer MDR 2000 E bei 170°C und 30 min.**

| **Mischung:** | | **13** | **14** | **15#** |
|---|---|---|---|---|
| Fmin | (dNm) | 6,8 | 1,8 | 1,6 |
| Fmax | (dNm) | 35,7 | 20,8 | 21,5 |
| Fmax - Fmin | (dNm) | 28,9 | 19 | 19,9 |
| TS 02 | (min) | 0,52 | 1,01 | 1,3 |
| T 10 | (min) | 0,6 | 1 | 1,3 |
| T 50 | (min) | 3,1 | 4,3 | 5,3 |
| T 80 | (min) | 10,7 | 9,2 | 10,9 |
| T 90 | (min) | 17,2 | 12,6 | 14,9 |
| T 95 | (min) | 22,4 | 15,7 | 18,8 |
| tan δ von MDR (Ende) | | 0,04 | 0,09 | 0,06 |

Man erkennt deutlich die Reaktivität von HXNBR enthaltenden Mischungen im Vergleich zu HNBR Mischungen wobei gezeigt wird, das mit HXNBR in Kombination mit Isocyanaten Vernetzungsdichten (siehe Fmax-Fmin) erreicht werden können, die vergleichbar und sogar höher den Vemetzungsdichten bekannt aus klassischen Peroxidvernetzungen sind. Ein gleichzeitiger Einsatz von auf Peroxid und Isocyanat basierenden Vernetzungssystemen wird belegt in Bezug auf die Vemetzungsaktivität von Diisocyanaten wie Desmodur^{®} TT sowie auch gegenüber peroxidischer Vernetzung mit Polydispersion^{®} T VC 40P.

**Tabelle 6: Ergebnisse der Haftungsprüfungen der Gummimischungen 13-14 an verschiedenen Thermoplaststreifen.**

| | | | | | |
|---|---|---|---|---|---|
| Die Trennfestigkeiten wurden bei 23°C abweichend von DIN 53 531 bei einer Abzugsgeschwindigkeit von 100 mm/min bestimmt. Die Probekörper wurden bei 170°C für 30 min vulkanisiert bei ca. 30 bar vulkanisiert. | | | | | |

| **Mischung:** | | | **13** | **14** | **15#** |
|---|---|---|---|---|---|
| Trennfestigkeit bei 23°C / Abzugsgeschwindigkeit 100mm/min | | | | | |
| Vestamid-Platten | | F-Max = Der Moment der Anfangskraft | | | |
| F-Max | N /25mm | | 27 | 56 | 9 |
| Trennfestigkeit im Median-Wert | | N / 25mm | 12 | 13 | 9 |
| Durethan-Platten | | | | | |
| F-Max | N /25mm | | 26 | 41 | 26 |
| Trennfestigkeit im Median-Wert | | N / 25mm | 22 | 22 | 16 |
| Trogamid^{®}-Platten | | | | | |
| F-Max | N /25mm | | 44 | 88 | 8 |
| Trennfestigkeit im Median-Wert | | N / 25mm | 41 | 25 | 7 |

In Gegenwart von HXNBR (Therban^{®} KA8889) werden höhere Haftungswerte an den verschiedenen Polyamiden erreicht als im Vergleich mit nicht carboxyliertem HNBR (Therban^{®} A 3407).

**Tabelle 7 Rezepturen zur Vernetzung von HXNBR Mischungen mit verschiedenen Epoxiden und unterschiedlichen Mengen Triphenylphosphin.**

| Die Mischungsbestandteile werden in Gewichtsteilen (pro 100) bezogen auf die eingesetzte Gesamtkautschukmenge (HXNBR / HNBR) angegeben. | | | | | | | | | | | | | | |
|---|---|---|---|---|---|---|---|---|---|---|---|---|---|---|
| **Mischungszusammensetzung:** | **16** | **17** | **18** | **19** | **20** | **21** | **22** | **23** | **24** | **25** | **26** | **27** | **28** | **29** |
| Therban^{®} KA 8889 | 100 | 100 | 100 | 100 | 100 | 100 | 100 | 100 | 100 | 100 | 100 | 100 | 100 | 100 |
| Rhenofit^{®} DDA-70 | 1,4 | 1,4 | 1,4 | 1,4 | 1,4 | 0,4 | 0,4 | 0,4 | 0,4 | 0,4 | 0,4 | 0,4 | 0,4 | 0,4 |
| Corax^{®} N 550 | 50 | 50 | 50 | 50 | 50 | 50 | 50 | 50 | 50 | 50 | 50 | 50 | 50 | 50 |
| Vulkanox^{®} ZMB2/C5 | | | 0,4 | 0,4 | 0,4 | 1,4 | 1,4 | 1,4 | 1,4 | 1,4 | 1,4 | 1,4 | 1,4 | 1,4 |
| Diplast^{®} TM 8-10/ST | | | 5 | 5 | 5 | 5 | 5 | 5 | 5 | 5 | 5 | 5 | 5 | 5 |
| Epoxy^{®} 4 | | | 5 | 5 | 5 | | | | | | | | | |
| DER Resin^{®} 332 | 5 | 10 | | | | | | | 10 | 10 | 10 | | | |
| Epoxy^{®} 3 | | | | | | 5 | 5 | 5 | | | | | | |
| DER^{®} 732 | | | | | | | | | | | | 5 | 5 | 5 |
| Triphenylphosphin* + Triphenylphosphin | 1 | 1 | 1 | 1 +2 | 1 +4 | 1 | 1 +2 | 1 +4 | 1 | 1 +2 | 1 +4 | 1 | 1 +1 | 1 +2 |

Zur Herstellung der Mischung werden die Bestandteile auf einer Mischwalze in der Reihenfolge Kautschuk, Füllstoffe, Stabilisatoren, Vernetzungsmittel und Verarbeitungshilfsmittel zugemischt. Die Walze hat eine Temperatur von 60°C.

**Tabelle 8 Ergebnisse der Vulkanisationsprüfung der Mischungen im Monsanto Rheometer MDR 2000 E bei 200°C und 30 min.**

| **Monsanto Rheometer MDR 2000 E : 200°C** | | | | | | | | | | | | | | |
|---|---|---|---|---|---|---|---|---|---|---|---|---|---|---|
| Mischung: | 16 | 17 | 18 | 19 | 20 | 21 | 22 | 23 | 24 | 25 | 26 | 27 | 28 | 29 |
| Fmin(dNm) | 0,8 | 0,8 | 6,9 | 7,4 | 10,4 | 5,6 | 15,5 | 23,0 | 1,1 | 25,1 | 27,0 | 0,9 | 0,9 | 0,9 |
| Fmax (dNm) | 20,3 | 35 | 38,5 | 27,2 | 26,5 | 38,5 | 34,9 | 34,2 | 32 | 35,9 | 31,6 | 6,9 | 10,6 | 10,6 |
| Fmax-Fmin (dNm) | 19,5 | 34,2 | 31,6 | 19,8 | 16,1 | 32,9 | 19,4 | 11,2 | 30,9 | 10,8 | 4,6 | 6 | 9,7 | 9,7 |
| TS 02(min) | 5,2 | 3,4 | 0,8 | 0,9 | 0,9 | 0,9 | 0,7 | 0,8 | 2,4 | 0,8 | 1 | 10,5 | 4,1 | 2,2 |
| T 10(min) | 5,1 | 4,6 | 0,9 | 0,9 | 0,8 | 1 | 0,7 | 0,7 | 3,1 | 0,7 | 0,7 | 4,1 | 2,8 | 1,6 |
| T 50(min) | 14,4 | 13 | 2,4 | 2,2 | 1,8 | 3,2 | 1,4 | 1,2 | 11,1 | 1,3 | 1,1 | 14,7 | 7,6 | 3,7 |
| T 80(min) | 22,4 | 21,3 | 5,4 | 4,5 | 3,4 | 8,6 | 3,3 | 2,7 | 19,9 | 4,1 | 2,6 | 23,1 | 14 | 6,9 |
| T 90(min) | 25,8 | 25,2 | 8,3 | 6,6 | 4,8 | 14,2 | 5,7 | 4,4 | 24,2 | 8,5 | 4,5 | 26,5 | 18,8 | 9,8 |
| T 95(min) | 27,8 | 27,4 | 11,5 | 9,1 | 6,7 | 19,8 | 9,1 | 6,9 | 26,9 | 13,9 | 7,1 | 28,2 | 22,9 | 13,4 |
| tan δ von MDR (Ende) | 0,07 | 0,02 | 0,02 | 0,03 | 0,03 | 0,02 | 0,02 | 0,02 | 0,03 | 0,01 | 0,01 | 0,24 | 0,15 | 0,14 |

Tabelle 8 zeigt den Einfluss des jeweiligen Epoxid-Typs, der Einsatzmenge des Epoxids und der Einsatzmenge von Triphenylphosphin auf die Vernetzungsgeschwindigkeit und Vernetzungsdichte von HXNBR mit Epoxiden. Nur in Gegenwart von Aktivatoren gelingt eine Vernetzung von HXNBR mit den aufgeführten Epoxiden bei akzeptablen Temperaturen ≤200°C und akzeptablen Zeiten (T95) ≤30 min.

**Tabelle 9 Ergebnisse physikalischer Prüfungen der Vulkanisateigenschaften bei Raumtemperatur.**

| Neben Zugdehnungskurven nach DIN 53504 wird die Shore A Härte nach DIN 53 505 geprüft. Die Vulkanisation erfolgte bei 180/200°C für den jeweils angegebenen Zeitraum bei ca. 30 bar Druck. | | | | | | | | | | |
|---|---|---|---|---|---|---|---|---|---|---|
| **Vulkanisateigenschaften :ISO- Stab 2 (aus 2mm Platte) bei 23°C** | | | | | | | | | | |
| Mischung: | | 21 | 22 | 23 | 24 | 25 | 26 | 27 | 28 | 29 |
| 200°C Heizzeiten: | (min) | 35 | ---- | ---- | 40 | ---- | ---- | ---- | ---- | ---- |
| 180°C Heizzeiten: | (min) | ---- | 15 | 15 | ---- | 15 | 15 | 40 | 30 | 25 |
| F | (MPa) | 21,8 | 10,6 | 9 | 20,5 | 11,1 | 12,5 | 18,1 | 18,9 | 20,1 |
| D | (%) | 143 | 74 | 68 | 196 | 82 | 97 | 613 | 621 | 667 |
| S 25 | (MPa) | 1,7 | 1,8 | 2 | 1,6 | 1,9 | 1,9 | ---- | ---- | ---- |
| S 50 | (MPa) | 4 | 5 | 5 | 3,2 | 4,5 | 4,1 | 1,5 | 1,5 | 1,4 |
| S 75 | (MPa) | 7,8 | 10,8 | 10,8 | 5,7 | 9,3 | 8 | ---- | ---- | ---- |
| S 100 | (MPa) | 13,0 | ---- | ---- | 8,9 | ---- | 13,3 | 2,4 | 2,5 | 2,3 |
| H (3 x 2mm Stab) | (Shore A) | 75 | 76 | 74 | 72 | 76 | 72 | 63 | 63 | 61 |

Polyfunktionelle Epoxide können in Gegenwart von geeigneten Aktivatoren mit HXNBR unter Vernetzung reagieren. Durch Einsatz von molekular gelöstem Triphenylphosphin kann die Menge von Aktivator auf ein Minimum beschränkt werden.

**Tabelle 10 Rezepturen zur Vernetzung von HXNBR und XNBR Mischungen mit verschiedenen Anteilen mehrwertiger Ionen (Aluminiumstearat) und verschiedenen Füllstoffen (Ruß / Silica).**

| Die Mischungsbestandteile werden in Gewichtsteilen (pro 100) bezogen auf die eingesetzte Gesamtkautschukmenge (HXNBR / XNBR) angegeben. | | | | | | | | | | |
|---|---|---|---|---|---|---|---|---|---|---|
| **Mischungszusammensetzung:** | **30** | **31** | **32** | **33** | **34#** | **35#** | **36#** | **37#** | **38** | **39** |
| Therban^{®} KA 8889 | 100 | 100 | 100 | 100 | ---- | ---- | ---- | ---- | 100 | 100 |
| Krynac^{®} X7.40 | ---- | ---- | ---- | ---- | 100 | 100 | 100 | 100 | ---- | ---- |
| Rhenofit^{®} DDA-70 | 1,4 | 1,4 | 1,4 | 1,4 | 1,4 | 1,4 | 1,4 | 1,4 | ---- | ---- |
| Corax^{®} N 550 | 50 | 50 | 50 | 50 | 50 | 50 | 50 | 50 | ---- | ---- |
| Vulkasil^{®} S | ---- | ---- | ---- | ---- | ---- | ---- | ---- | ---- | 50 | 50 |
| Vanire^{®} VAM | ---- | ---- | ---- | ---- | ---- | ---- | ---- | ---- | 1 | 1 |
| Diplast^{®} TM 8-10/ST | ---- | ---- | ---- | ---- | ---- | ---- | ---- | ---- | 10 | 10 |
| Silquest^{®} RC-1 Silane | ---- | ---- | ---- | ---- | ---- | ---- | ---- | ---- | 4 | 4 |
| Aluminiumstearat | 1 | 2 | 4 | 8 | 1 | 2 | 4 | 8 | 2 | 8 |
| Triphenylphosphin* | 1 | 1 | 1 | 1 | | | | | 1 | 1 |

Zur Herstellung der Mischung werden die Bestandteile auf einer Mischwalze in der Reihenfolge Kautschuk, Füllstoffe, Stabilisatoren, Vernetzungsmittel und Verarbeitungshilfsmittel zugemischt. Die Walze hat eine Temperatur von 60°C.

**Tabelle 11 Ergebnisse der Vulkanisationsprüfung der Mischungen im Monsanto Rheometer MDR 2000 E bei 160°C und 30 min.**

| **Monsanto Rheometer MDR 2000 E : 160°C** | | | | | | | | | | |
|---|---|---|---|---|---|---|---|---|---|---|
| Mischung : | 30 | 31 | 32 | 33 | 34# | 35# | 36# | 37# | 38 | 39 |
| Fmin (dNm) | 2,6 | 3,4 | 5,0 | 4,1 | 1,7 | 2,2 | 3,3 | 4,8 | 5,8 | 9,2 |
| Fmax (dNm) | 3,8 | 6,2 | 10,9 | 18,7 | 3,1 | 4,5 | 8,2 | 14,6 | 8,7 | 13,3 |
| Fmax - Fmin (dNm) | 1,2 | 2,8 | 5,9 | 14,6 | 1,4 | 2,3 | 4,9 | 9,8 | 2,9 | 4,1 |
| TS 02(min) | ---- | 10,2 | 1,3 | 0,07 | ---- | 19,6 | 3,1 | 0,9 | 0,4 | 0,3 |
| T 10(min) | 0,8 | 0,5 | 0,5 | 0,06 | 0,8 | 0,8 | 0,6 | 0,6 | 0,2 | 0,2 |
| T 50(min) | 7,9 | 4,5 | 2,7 | 1 | 5 | 5,4 | 4,6 | 3,3 | 0,3 | 0,3 |
| T 80(min) | 18,3 | 13 | 9 | 4,5 | 14,7 | 15,7 | 14,4 | 11 | 0,4 | 0,4 |
| T 90(inin) | 23,1 | 19 | 14,4 | 8,9 | 21,2 | 21,9 | 24,6 | 22,2 | 0,5 | 0,5 |
| T 95(min) | 25,9 | 23,2 | 19,4 | 14,8 | 25 | 25,5 | 24,6 | 22,2 | 0,6 | 0,6 |
| tan δ von MDR (Ende) | 0,56 | 0,36 | 0,21 | 0,18 | 0,6 | 0,4 | 0,3 | 0,2 | 0,58 | 0,33 |

Mit steigendem Anteil Aluminiumstearat nimmt die Vemetzungsdichte zu. Dieser Effekt ist deutlicher ausgeprägter für HXNBR als für XNBR. Mit HXNBR werden höhere Vemetzungsdichten und höhere Vemetzungsgeschwindigkeiten erreicht, obwohl im NBR (7 % im Vergleich zu 5 % im HXNBR) eine höhere Konzentration an Carboxylgruppen vorhanden ist.

**Tabelle 12 Ergebnisse physikalischer Prüfungen der Vulkanisateigenschaften bei Raumtemperatur.**

| Neben Zugdehnungskurven nach DIN 53504 wird die Shore A Härte nach DIN 53505 geprüft. Die Vulkanisation erfolgte bei 160°C für den jeweils angegebenen Zeitraum bei ca. 30 bar Druck. | | | | | | | | | | |
|---|---|---|---|---|---|---|---|---|---|---|
| **Vulkanisateigenschaften :ISO- Stab 2 (aus 2mm Platte) bei 23°C** | | | | | | | | | | |
| Mischung: | 30 | 31 | 32 | 33 | 34# | 35# | 36# | 37# | 38 | 39 |
| 160°C Heizzeiten: (min) | 30 | 30 | 25 | 20 | 30 | 30 | 30 | 30 | 30 | 30 |
| F(MPa) | 8 | 10,4 | 12 | 15,4 | 0,7 | 2,3 | 5,5 | 9,4 | 2,4 | 9,6 |
| D(%) | 892 | 766 | 548 | 397 | 1315 | 961 | 471 | 251 | 1713 | 675 |
| S 100(MPa) | 2,0 | 2,3 | 3,6 | 7,2 | 1 | 1,4 | 2,4 | 5,5 | 0,8 | 2,2 |
| S 200(MPa) | 3,2 | 3,9 | 6,6 | 12,3 | 1,1 | 1,9 | 4 | 8,7 | 0,71 | 3,1 |
| S 300(MPa) | 4,5 | 5,7 | 9,4 | 14,7 | 1,2 | 2,3 | 5,2 | ---- | 0,7 | 4,2 |

Carboxylgruppenhaltige Polymere wie XNBR (carboxylierter Nitril-Butadien-Kautschuk), HXNBR können mit mehrwertigen Ionen unter Vernetzung reagieren. Mit HXNBR werden in Gegenwart von molekular gelösten Triphenylphosphin überraschenderweise deutlich höhere physikalische Eigenschaften wie Zugfestigkeit und Modul bei verschiedenen Dehnungen (z.B. S100 = Modul bei 100% Dehnung, etc.) erreicht als mit XNBR.

**Tabelle 13 Rezepturen zur Vernetzung von HXNBR und HNBR Mischungen mit Formaldehyd-Phenol Vernetzungssystemen.**

| Die Mischungsbestandteile werden in Gewichtsteilen (pro 100) bezogen auf die eingesetzte Gesamtkautschukmenge (HXNBR / HNBR) angegeben. | | |
|---|---|---|
| **Mischungszusammensetzung** | **40#** | **41** |
| Therban^{®} A 3407 | 100 | |
| Therban^{®} KA 8889 | | 100 |
| Rhenofit^{®} DDA-70 | 1,4 | 1,4 |
| Corax^{®}N 550 | 50 | 50 |
| Resin^{®} SP1045 | 4 | 4 |
| Zinndichlorid | 0,5 | 0,5 |
| Triphenylphosphin* | 1 | 1 |

Zur Herstellung der Mischung werden die Bestandteile auf einer Mischwalze in der Reihenfolge Kautschuk, Füllstoffe, Stabilisatoren, Vernetzungsmittel und Verarbeitungshilfsmittel zugemischt. Die Walze hat eine Temperatur von 60°C.

**Tabelle 14 Ergebnisse der Vulkanisationsprüfung der Mischungen im Monsanto Rheometer MDR 2000 E bei 160°C und 30 min.**

| **Monsanto Rheometer MDR 2000 E : 160°C** | | | |
|---|---|---|---|
| Mischung: | | **40#** | **41** |
| Fmin | (dNm) | 2,5 | 2,1 |
| Fmax | (dNm) | 8,9 | 18,2 |
| Fmax - Fmin | (dNm) | 6,4 | 16,1 |
| TS 02 | (min) | 7,9 | 1,4 |
| T 10 | (min) | 3 | 1,2 |
| T 50 | (min) | 12,4 | 4 |
| T 80 | (min) | 21,5 | 8,3 |
| T 90 | (min) | 25,4 | 12,4 |
| T 95 | (min) | 27,7 | 17,3 |
| tan δ von MDR (Ende) | | 0,34 | 0,12 |

Im Vergleich zu HNBR zeigt HXNBR eine deutlich höhere Vernetzungsgeschwindigkeit und Vemetzungsdichte bei der Vernetzung durch hitzeaktivierbare Formaldehyd-Phenol-Vernetzungssysteme wie sie typischerweise zur Vernetzung von z.B. Butylkautschuk (Isoprene-Isobutylen-Copolymer) aber nicht zur Vernetzung von HNBR verwendet werden.

## Patentansprüche

1. Verwendung von einem hydrierten carboxylierten Nitrilbutadienkautschuk (HXNBR), abgeleitet von den Monomeren Butadien, Acrylnitril, Methacrylsäure sowie weiteren acrylischen und/oder vinylischen Monomeren, in dem 0,1 bis 5 Gew.-% Triphenylphosphin molekular verteilt sind und der durch Hydrierung eines mittels Emulsionspolymerisation hergestellten XNBR-Kautschuks hergestellt wird, wodurch der HXNBR-Kautschuk direkt mit dem molekular verteilten Triphenylphosphin ausgestattet ist, als Vernetzungsmittel für Gummi, Kunststoffe und/oder Klebstoffsysteme, wobei die zu vernetzenden Gummis, Kunststoffe und/oder Klebstoffsysteme ausgewählt sind aus der Gruppe bestehend aus Polyurethanen, Polyharnstoffen, Polyestern, Polyamiden, Polymethacrylaten, Polyepoxiden, Polyepichlorhydrinen, den Produkten aus bi- oder polyfunktionellen Epoxiden, Thiiranen, Isocyanaten oder Carbodiimiden mit bi- oder polyfunktionellen Aminen, Alkoholen oder Formaldehyd-Phenolharzen, Kautschuken die über Radikalgeneratoren vernetzt werden, ausgewählt aus Nitrilkautschuk, Chloroprenkautschuk, Ethylen-Acrylat-Kautschuk, Fluorkautschuk und chlorsulfoniertem Polyethylen, und ionisch vernetzbaren Mischungen.

2. Verwendung nach Anspruch 1, wobei das HXNBR noch weiteren nicht molekular-verteilten Aktivator enthält.

3. Verwendung nach Anspruch 2, wobei 10 bis 99,9 Gew.-% des HXNBR, in dem Triphenylphosphin molekular verteilt ist, und 0,1 bis 90 Gew.-% des nicht molekular-verteilten Aktivators eingesetzt werden, und beide Gew.-% Angaben zusammen 100 ergeben.

4. Verwendung nach einem der Ansprüche 2 oder 3, wobei der Aktivator ausgewählt ist aus der Gruppe bestehend aus Ethanolamin, primären oder sekunkären aliphatischen oder aromatischen Aminen, organischen Phosphorverbindungen, sauren Katalysatoren und Mischungen dieser Verbindungen.

5. Verwendung nach einem der Ansprüche 2 oder 3, wobei 0 bis 90 Gew.-% weitere Zusatzstoffe ausgewählt aus der Gruppe bestehend aus organischen Lösungsmitteln, Stabilisatoren, Emulgatoren, Wasser, Weichmacher, Verarbeitungshilfsmittel und Füllstoffe eingesetzt werden, bezogen auf die Summe von HXNBR, in dem Triphenylphosphin molekular verteilt ist, und dem nicht molekular-verteilten Aktivator.

## Claims

1. Use, as crosslinking agent for rubber, plastics and/or adhesive systems, of a hydrogenated carboxylated nitrile-butadiene rubber (HXNBR), which derives from the monomers butadiene, acrylonitrile and methacrylic acid, and also from other acrylic and/or vinylic monomers, and which comprises from 0.1 to 5% by weight of molecularly dispersed triphenylphosphine and which is produced via hydrogenation of an emulsion-polymerized XNBR rubber, where the HXNBR rubber has thus been directly modified with the molecularly dispersed triphenylphosphine, where the rubbers, plastics and/or adhesive systems to be crosslinked are selected from the group consisting of polyurethanes, polyureas, polyesters, polyamides, polymethacrylates, polyepoxides, polyepichlorohydrins, the products obtained from bi- or polyfunctional epoxides, thiiranes, isocyanates or carbodiimides with bi- or polyfunctional amines, alcohols or formaldehyde-phenolic resins, rubbers which are crosslinked by way of free-radical generators, selected from nitrile rubber, chloroprene rubber, ethylene-acrylate rubber, fluororubber and chlorosulphonated polyethylene, and ionically crosslinkable mixtures.

2. Use according to Claim 1, where the HXNBR further comprises other non-molecularly-dispersed activator.

3. Use according to Claim 2, where from 10 to 99.9% by weight of the HXNBR comprising molecularly dispersed triphenylphosphine is used, and from 0.1 to 90% by weight of the non-molecularly-dispersed activator is used, and the two % by weight values give a total of 100.

4. Use according to Claim 2 or 3, where the activator is selected from the group consisting of ethanolamine, primary or secondary aliphatic or aromatic amines, organophosphorus compounds, acidic catalysts and mixtures of these compounds.

5. Use according to Claim 2 or 3, where from 0 to 90% by weight of other additives selected from the group consisting of organic solvents, stabilizers, emulsifiers, water, plasticizer, processing aid and fillers is used, based on the entirety of HXNBR comprising molecularly dispersed triphenylphosphine and of the non-molecularly-dispersed activator.

## Revendications

1. Utilisation d'un caoutchouc de nitrile-butadiène hydrogéné et carboxylé (HXNBR), dérivé des monomères butadiène, acrylonitrile, acide méthacrylique et d'autres monomères acryliques et/ou vinyliques, dans lequel 0,1 à 5 % en poids de triphénylphosphine est distribuée moléculairement et qui est fabriqué par hydrogénation d'un caoutchouc XNBR fabriqué par polymérisation en émulsion, le caoutchouc HXNBR étant ainsi directement équipé avec la triphénylphosphine distribuée moléculairement, en tant qu'agent de réticulation pour caoutchoucs, plastiques et/ou systèmes adhésifs, les caoutchoucs, plastiques et/ou systèmes adhésifs à réticuler étant choisis dans le groupe constitué par les polyuréthanes, les polyurées, les polyesters, les polyamides, les polyméthacrylates, les polyépoxydes, les polyépichlorhydrines, les produits d'époxydes, de thiiranes, d'isocyanates ou de carbodiimides bi- ou polyfonctionnels avec des amines, des alcools ou des résines formaldéhyde-phénol bi- ou polyfonctionnels, les caoutchoucs qui sont réticulés par des générateurs de radicaux, choisis parmi le caoutchouc de nitrile, le caoutchouc de chloroprène, le caoutchouc d'éthylène-acrylate, le caoutchouc fluoré et le polyéthylène chlorosulfoné, et les mélanges réticulables par voie ionique.

2. Utilisation selon la revendication 1, dans laquelle l'HXNBR contient encore un autre activateur non distribué moléculairement.

3. Utilisation selon la revendication 2, dans laquelle 10 à 99,9 % en poids de l'HXNBR, dans lequel la triphénylphosphine est distribuée moléculairement, et 0,1 à 90 % en poids de l'activateur non distribué moléculairement sont utilisés, les deux données de % en poids atteignant ensemble 100.

4. Utilisation selon l'une quelconque des revendications 2 ou 3, dans laquelle l'activateur est choisi dans le groupe constitué par l'éthanolamine, les amines aliphatiques ou aromatiques primaires ou secondaires, les composés de phosphore organiques, les catalyseurs acides et les mélanges de ces composés.

5. Utilisation selon l'une quelconque des revendications 2 ou 3, dans laquelle 0 à 90 % en poids d'autres additifs choisis dans le groupe constitué par les solvants organiques, les stabilisateurs, les émulsifiants, l'eau, les plastifiants, les adjuvants d'usinage et les charges sont utilisés, par rapport à la somme de l'HXNBR dans lequel la triphénylphosphine est distribuée moléculairement et de l'activateur non distribué moléculairement.
